# FASCICULE DE BREVET EUROPEEN

(11) **EP 2 514 637 B1**
(45) Date de publication et mention de la délivrance du brevet: **20.11.2013**
(21) Numéro de dépôt: 12161285.7
(22) Date de dépôt: 26.03.2012
(51) Int. Cl.: B60R 3/00

(54) **Dispositif d'accès en hauteur escamotable**
Einklappbare Höhenzugangsvorrichtung
Retractable device for access at height

(30) Priorité: 20.04.2011 FR 1101241
(43) Date de publication de la demande: 24.10.2012
(73) Titulaire: NEXTER Systems, 42328 Roanne Cedex (FR)
(72) Inventeur: Bertrand, Ludovic, 18023 BOURGES CEDEX (FR)
(74) Mandataire: Chaillot, Geneviève

(56) Documents cités:
- US-A- 5 988 316

## Description

Le domaine technique de l'invention est celui des dispositifs d'accès en hauteur escamotables pour véhicules.

L'accès aux parties hautes de certains véhicules au gabarit imposant est souvent délicat du fait même de ce gabarit. Cependant cet accès est souvent indispensable par exemple pour permettre à un pilote de char ou d'engin de travaux publics de pouvoir accéder à son poste de pilotage.

Pour cela il est classique d'utiliser une échelle. Cette échelle doit pouvoir être disponible à tout moment à l'extérieur du véhicule or son volume risque d'augmenter le gabarit routier du véhicule.

De plus la mise en place ou le déploiement de l'échelle doit pouvoir se faire depuis le haut comme depuis le bas du véhicule. Le dispositif d'accès doit aussi permettre de franchir des zones fragiles ou dangereuses (parties mobiles par exemple) des parois du véhicule sans encombre.

Il est connu dans le brevet US5988316 d'accéder au poste de conduite d'un engin chenillé de travaux publics avec une échelle pivotante actionnée par un vérin. Le vérin a pour rôle de lever ou d'abaisser l'échelle suivant les besoins d'embarquement ou de débarquement.

Ce dispositif pose un problème d'encombrement. Il ne permet pas d'avoir une compacité ne modifiant pas de manière significative le gabarit du véhicule. En outre cette solution est complexe car elle requiert un apport en énergie hydraulique.

Ainsi l'invention à pour objet un dispositif d'accès en hauteur escamotable solidaire d'une paroi d'un véhicule, dispositif d'accès escamotable **caractérisé en ce qu'**il comporte une échelle gauche et une échelle droite contiguës comportant chacune un montant gauche et un montant droit reliés par des barreaux, tous les montants étant parallèles entre eux, l'échelle gauche et l'échelle droite étant liées entre elles par au moins une articulation liant le montant gauche de l'échelle droite et le montant droit de l'échelle gauche, une des deux échelles, dite échelle pivotante, étant par ailleurs liée à la paroi du véhicule au niveau de son autre montant par au moins une charnière d'axe de rotation parallèle aux montants, l'autre échelle, dite échelle attenante, comportant un moyen d'indexation permettant le verrouillage de cette échelle attenante par rapport à la paroi suivant au moins une position de verrouillage.

Selon une caractéristique de l'invention, l'échelle attenante comporte au moins une liaison pivot glissant au niveau du montant non lié à l'autre échelle, liaison pivot glissant solidaire de la paroi et perpendiculaire aux montants.

Avantageusement, le moyen d'indexation comporte au moins un perçage correspondant à une position de verrouillage, perçage traversé par une tringle solidaire de l'échelle attenante.

Avantageusement, les deux échelles sont coplanaires lorsque le moyen d'indexation est sur une première position de verrouillage.

Avantageusement, les deux échelles forment un angle entre elles lorsque le moyen d'indexation est sur une seconde position de verrouillage.

Selon une caractéristique de l'invention, le moyen d'indexation est solidaire d'au moins une liaison pivot-glissant.

Avantageusement, le moyen d'indexation est déverrouillé ou verrouillé à l'aide d'un moyen de commande actionnable du haut du dispositif comme du bas du dispositif.

Avantageusement, le moyen de commande est constitué par la tringle qui comporte des moyens de préhension à chacune de ses extémités supérieure et inférieure.

Selon une caractéristique de l'invention le dispositif comporte au moins une palette de manoeuvre placée au voisinage d'un axe de rotation de l'articulation entre les échelles.

Selon une caractéristique de l'invention, chaque échelle comporte des poignées parallèles aux montants et solidaires des barreaux de l'échelle considérée.

L'invention sera mieux comprise à la lecture de la description suivante, description faite en références aux figures annexées dans lesquelles:
La figure 1 représente un dispositif d'accès escamoté en vue en perspective de trois quarts.
La figure 2 représente un dispositif d'accès déployé en vue en perspective de trois quarts.
La figure 3 est une vue de détails montrant une liaison pivot glissant et un moyen d'indexation.
La figure 4 représente une vue de détail du moyen d'indexation avec coupe partielle.

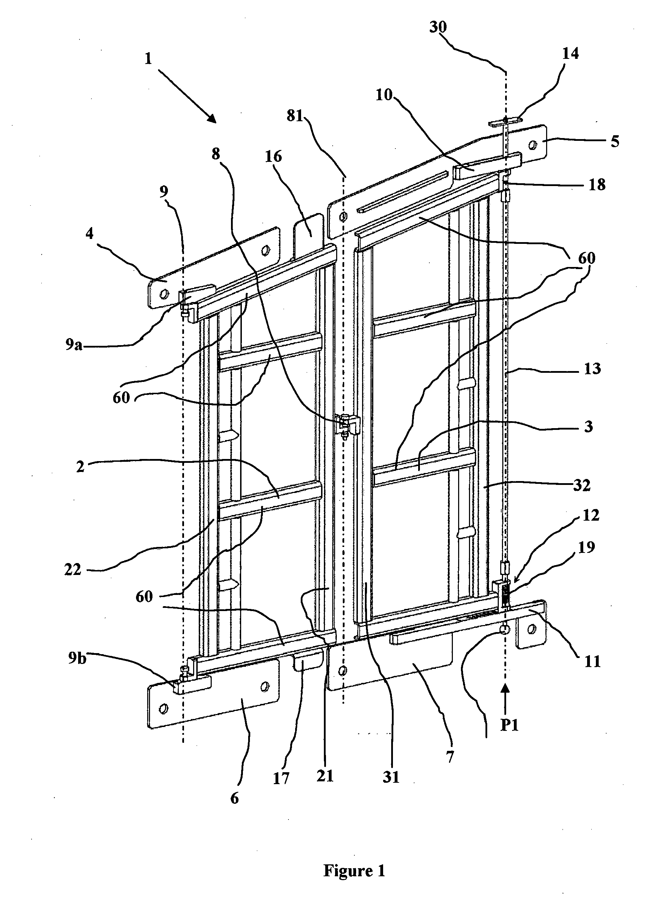

Selon la figure 1, une paroi verticale (paroi non représentée) d'un véhicule blindé comporte un dispositif d'accès en hauteur escamotable 1.

Ce dispositif 1 est rendu solidaire de la paroi au moyen de boulons ou vis mis en place dans les perçages de platines de fixation 4,5,6 et 7. Les plans des platines permettent sur les figures de matérialiser la paroi sur laquelle elles sont fixées.

Le dispositif 1 comporte deux échelles 2 et 3, une échelle droite 3 et une échelle gauche 2. Chaque échelle 2 et 3 comporte deux montants verticaux: les montants 21 et 22 pour l'échelle gauche 2 et les montants 31 et 32 pour l'échelle droite 3. Des barreaux 60 sont perpendiculaires aux différents montants.

L'échelle gauche 2 est liée à l'échelle droite 3 par une articulation 8 reliant le montant droit 21 de l'échelle de gauche 2 au montant gauche 31 de l'échelle de droite 3. Cette articulation 8 comporte un axe de rotation 81 parallèle aux montants 21,22,31,32.

Sur l'échelle gauche 2, chacune des extrémités voisines du montant gauche 22 de l'échelle, comporte une charnière 9a et 9b d'axe 9 parallèle aux montants 21,22,31,32. Ces charnières 9a et 9b sont chacune solidaire d'une platine 4 ou 6 solidarisant le dispositif à la paroi du véhicule. Pour le mode de réalisation qui est ici décrit l'échelle de gauche 2 sera qualifiée par la suite d'échelle pivotante 2.

L'échelle de droite 3, qui sera par la suite qualifiée d'échelle attenante à l'échelle pivotante 2, comporte une liaison pivot glissant 18 et 19 au voisinage de chaque extrémité supérieure et inférieure du montant de droite 32. Les liaisons pivots glissants 18 et 19 comportent un axe de rotation 30 parallèle aux montants. Cet axe 30 est, selon le mode de réalisation représenté, formé par une tringle 13. Chacune des liaisons pivot glissant 18 et 19 comporte une glissière 10 ou 11 qui est perpendiculaire aux montants 21,22,31,32 des échelles 2 et 3.

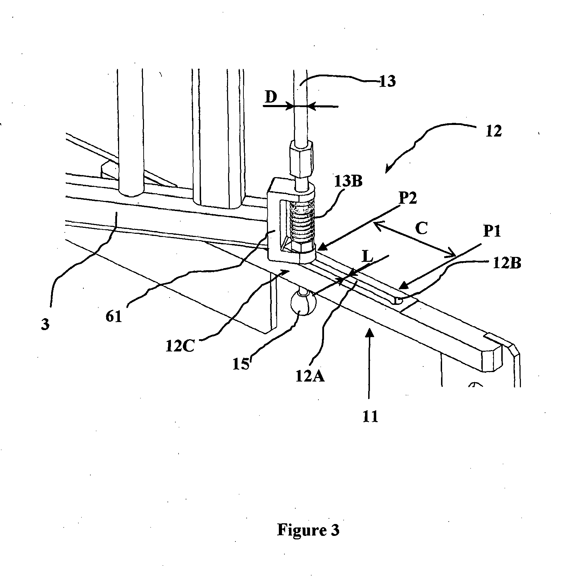

La figure 3 permet de voir plus précisément la structure d'une des glissières.

Chacune des glissières 10 et 11 comporte une rainure 12A dans laquelle coulisse la tringle 13 suivant une direction perpendiculaire à l'axe 30 de la tringle 13. Chacune des liaisons pivot glissant 18 et 19 est solidaire de la paroi du véhicule par l'intermédiaire des platines 5 ou 7.

On notera que sur la figure 1 les deux échelles 2 et 3 sont coplanaires, ce qui correspond à la position escamotée du dispositif 1. Afin d'être maintenue dans cette position escamotée, un moyen d'indexation 12 est solidaire d'au moins une des glissières 10 ou 11, en l'occurrence la glissière inférieure 11. Selon un autre mode de réalisation non représenté, la glissière et le moyen d'indexation peuvent être dissociés.

Le moyen d'indexation 12 est actionnable à l'aide d'un moyen de commande 13 qui permet de le déverrouiller. Le moyen de commande 13 est ici constitué par la tringle 13 elle-même qui dispose à chacune de ses extrémités d'un moyen de préhension 14 ou 15, par exemple une poignée. Ces moyens de préhensions 14 et 15 permettent d'actionner la tringle de commande 13 depuis le bas ou depuis le haut du dispositif 1.

On notera que dans le mode de réalisation représenté, la tringle 13 fait office de moyen de commande 13 et matérialise aussi l'axe de rotation 30 pour les pivots glissant 18 et 19.

Des palettes de manoeuvre 16 et 17 sont placées sur l'échelle pivotante 2 à chacune de ses extrémités haute et basse. Ces palettes de manoeuvre 16 et 17 sont situées au voisinage de l'axe de rotation 81 de l'articulation 8 reliant les montants 21 et 31 de l'échelle pivotante 2 et de l'échelle attenante 3 (donc à proximité du montant droit 21 de l'échelle pivotante 2).

Dans la position escamotée, le dispositif 1 ne forme qu'une surépaisseur de l'ordre de 55mm par rapport à la paroi ce qui permet d'inscrire facilement le dispositif 1 dans le gabarit routier du véhicule. On notera que les échelles 2 et 3 ont une forme générale trapézoïdale. Ceci permet d'optimiser l'encombrement du dispositif 1 en l'adaptant la forme des extrémités supérieures des deux échelles au profil latéral du véhicule qui pourra comporter un plan incliné.

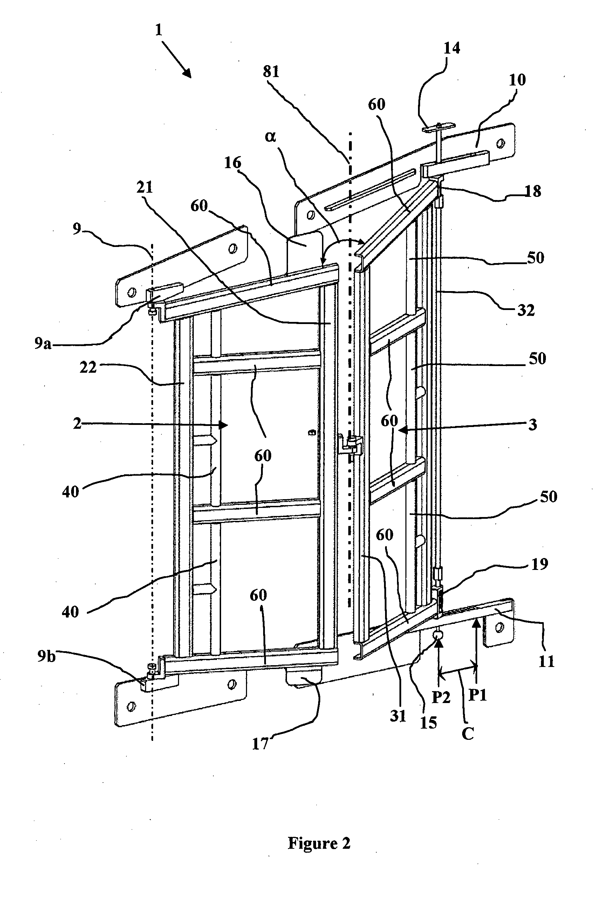

La figure 2 montre le dispositif 1 placé en position déployée. Dans cette position les deux échelles 2 et 3 ne sont plus coplanaires et forment entre elles un angle α permettant à un utilisateur (non représenté) de placer ses pieds et ses mains pour monter sur les échelles 2 et 3. Le déploiement du dispositif 1 est obtenu depuis le haut ou le bas du dispositif 1. Pour cela l'utilisateur doit actionner un des moyens de préhension 14 ou 15 afin de débloquer le moyen d'indexation 12 d'une première position de verrouillage P1 (verrouillage en position escamotée représentée à la figure 1). Simultanément l'opérateur tire une des palettes de manoeuvre 16 ou 17 de manière à éloigner les échelles 2 et 3 de la paroi. De cette manière chacune des échelles 2 et 3 pivote. Ce faisant, la tringle 13 opère aussi une translation le long des glissières 10 et 11. L'échelle dite attenante 3 pivote et son montant de droite 32 glisse avec une course C de la première position de verrouillage P1 jusqu'à une seconde position de verrouillage P2 (celle représentée figure 2). L'opérateur peut alors de nouveau actionner un des moyens de préhension 14 ou 15 afin de bloquer le moyen d'indexation 12 dans la seconde position de verrouillage P2. Le dispositif est alors prêt pour permettre l'ascension ou la descente de la paroi du véhicule.

L'angle α diminue lorsque la course C augmente entre la première position de verrouillage P1 et la seconde position de verrouillage P2. Les échelles 2 et 3 ont ici la même largeur. La largeur de chaque échelle 2 et 3 pourra être choisie différente de manière à adapter le dispositif à une géométrie d'ouverture ou à une course C souhaitée.

Des poignées de maintien verticales 40 et 50 relient les barreaux 60 consécutifs de chacune des échelles 2 et 3. Ces poignées 40 et 50 ont une épaisseur inférieure ou égale à celle des échelles 2 et 3. Elles ne forment donc pas de surépaisseur d'un coté ou de l'autre de l'échelle 2 ou 3. Ces poignées 40 et 50 permettent à l'utilisateur de progresser plus confortablement le long des échelles 2 et 3, sans poser les mains sur les barreaux 60 qui pourront être recouverts d'un revêtement antidérapant de nature abrasive.

La figure 3 montre de façon détaillée un exemple de réalisation du moyen d'indexation 12, positionné au niveau de la glissière inférieure 11.

La glissière 11 comporte la rainure 12A d'une longueur équivalente à la course C entre les deux positions de verrouillage P1 et P2. La rainure 12A comporte deux perçages 12B et 12C placés aux extrémités de la rainure 12A et correspondant aux positions P1 et P2. Ces perçages 12B et 12C ont un diamètre supérieur à la largeur L de la rainure 12A. Pour bloquer le dispositif 1 en position escamotée ou déployée, la tringle de commande 13, qui a un diamètre D égal à celui des perçages 12B et 12C, est logée dans l'un ou l'autre de ces perçages.

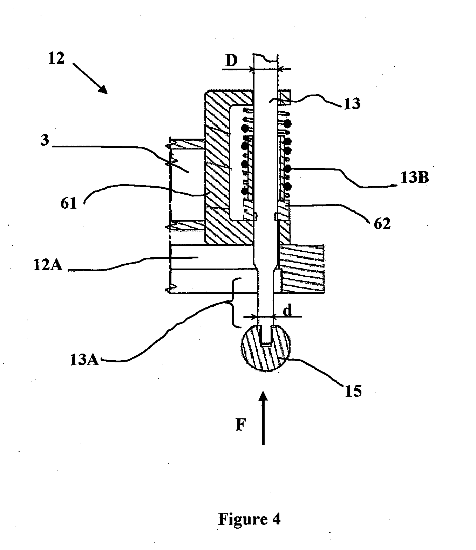

Comme on le voit à la figure 4, la tringle 13 comporte, au voisinage du moyen d'indexation 12, une portion 13A de diamètre réduit d inférieur à la largeur L de la rainure 12A.

Pour déverrouiller le dispositif 1, l'utilisateur déplace la tringle 13 suivant la direction verticale F jusqu'à positionner la portion de diamètre réduit 13A au niveau de la rainure 12A. La tringle 13 peut alors coulisser le long de la glissière 11.

Le pivotement de l'échelle attenante 3 est assuré ici grâce à une chape pivotante 61 qui peut pivoter sur la tringle 13 lors de la translation de cette dernière. Ainsi le pivotement/translation de l'échelle de droite 3 ou échelle attenante peut s'opérer telle que précédemment décrit.

Lorsque la tringle 13 a parcouru la course C, elle se positionne automatiquement dans le perçage 12C grâce à un ressort de rappel 13B qui est monté dans la chape 61 et qui pousse une rondelle 62 solidaire de la tringle 13.

La glissière supérieure 10 pourra comporter un moyen d'indexation de structure analogue. La fixation de l'échelle attenante 3 est également réalisée au niveau de la glissière supérieure par une chape montée pivotante sur la tringle 13. Le dispositif sera préférentiellement réalisé en acier ou dans des matériaux plastiques rigides.

## Revendications

1. Dispositif d'accès en hauteur (1) escamotable solidaire d'une paroi d'un véhicule, dispositif d'accès escamotable **caractérisé en ce qu'**il comporte une échelle gauche (2) et une échelle droite (3) contiguës comportant chacune un montant gauche (22,31) et un montant droit (21,32) reliés par des barreaux (60), tous les montants (21,22,31,32) étant parallèles entre eux, l'échelle gauche (2) et l'échelle droite (3) étant liées entre elles par au moins une articulation (8) liant le montant gauche (31) de l'échelle droite (3) et le montant droit (21) de l'échelle gauche (2), une des deux échelles (2), dite échelle pivotante, étant par ailleurs liée à la paroi du véhicule au niveau de son autre montant (21) par au moins une charnière (9a, 9b) d'axe de rotation (9) parallèle aux montants (21,22,31,32), l'autre échelle (3), dite échelle attenante (3), comportant un moyen d'indexation (12) permettant le verrouillage de cette échelle attenante (3) par rapport à la paroi suivant au moins une position de verrouillage.

2. Dispositif d'accès escamotable (1) selon la revendication 1, **caractérisé en ce que** l'échelle attenante (3) comporte au moins une liaison pivot glissant (18,19) au niveau du montant (32) non lié à l'autre échelle (2), liaison pivot glissant (18,19) solidaire de la paroi et perpendiculaire aux montants (21,22,31,32).

3. Dispositif d'accès escamotable (1) selon une des revendications 1 ou 2, **caractérisé en ce que** le moyen d'indexation (12) comporte au moins un perçage (12B,12C) correspondant à une position de verrouillage (P1,P2), perçage (12B,12C) traversé par une tringle (13) solidaire de l'échelle attenante (3).

4. Dispositif d'accès escamotable (1) selon une des revendications 1 à 3, **caractérisé en ce que** les deux échelles (2 et 3) sont coplanaires lorsque le moyen d'indexation (12) est sur une première position de verrouillage (P1).

5. Dispositif d'accès escamotable (1) selon une des revendications 1 à 4, **caractérisé en ce que** les deux échelles (2 et3) forment un angle (∝) entre elles lorsque le moyen d'indexation (12) est sur une seconde position (P2) de verrouillage.

6. Dispositif d'accès escamotable (1) selon une des revendications 1 à 5, **caractérisé en ce que** le moyen d'indexation (12) est solidaire d'au moins une liaison pivot-glissant (18, 19)

7. Dispositif d'accès escamotable (1) selon une des revendications 1 à 6, **caractérisé en ce que** le moyen d'indexation (12) est déverrouillé ou verrouillé à l'aide d'un moyen de commande (13) actionnable du haut du dispositif (1) comme du bas du dispositif (1).

8. Dispositif d'accès escamotable (1) selon les revendications 3 et 7, **caractérisé en ce que** le moyen de commande (13) est constitué par la tringle (13) qui comporte des moyens de préhension (14,15) à chacune de ses extrémités supérieure et inférieure

9. Dispositif d'accès escamotable (1) selon une des revendications 1 à 8, **caractérisé en ce que** le dispositif (1) comporte au moins une palette de manoeuvre (16) placée au voisinage d'un axe de rotation (81) de l'articulation (8) entre les échelles (2,3).

10. Dispositif d'accès escamotable (1) selon une des revendications 1 à 9, **caractérisé en ce que** chaque échelle (2,3) comporte des poignées (40) parallèles aux montants (1) et solidaires des barreaux (60) de l'échelle (2,3) considérée.

## Patentansprüche

1. Einklappbare Höhenzugangsvorrichtung (1), die fest mit einer Wand eines Fahrzeugs verbunden ist, wobei die einklappbare Zugangsvorrichtung **dadurch gekennzeichnet ist, dass** sie eine linke Leiter (2) und eine rechte Leiter (3) aufweist, die aneinandergrenzen, wobei jede einen linken Holm (22, 31) und einen rechten Holm (21, 32) aufweist, die über Sprossen (60) verbunden sind, alle Holme (21, 22, 31, 32) parallel zueinander verlaufen, die linke Leiter (2) und die rechte Leiter (3) miteinander über mindestens ein Gelenk (8) verbunden sind, das den linken Holm (31) der rechten Leiter (3) und den rechten Holm (21) der linken Leiter (2) verbindet, eine der beiden Leitern (2), die sogenannte Schwenkleiter, darüber hinaus an dem anderen Holm (21) über mindestens ein Scharnier (9a, 9b) mit der parallel zu den Holmen (21, 22, 31, 32) verlaufenden Drehachse (9) mit der Wand des Fahrzeugs verbunden ist, die andere Leiter (3), die sogenannte Nebenleiter (3), ein Positionierungsmittel (12) aufweist, das die Verriegelung dieser Nebenleiter (3) bezogen auf die Wand in mindestens einer Verriegelungsposition ermöglicht.

2. Einklappbare Zugangsvorrichtung (1) nach Anspruch 1, **dadurch gekennzeichnet, dass** die Nebenleiter (3) mindestens eine Gleitschwenkverbindung (18, 19) an dem Holm (32) aufweist, der nicht mit der anderen Leiter (2) verbunden ist, wobei die Gleitschwenkverbindung (18, 19) fest mit der Wand verbunden ist und senkrecht zu den Holmen (21, 22, 31, 32) verläuft.

3. Einklappbare Zugangsvorrichtung (1) nach Anspruch 1 oder 2, **dadurch gekennzeichnet, dass** das Positionierungsmittel (12) mindestens eine Bohrung (12B, 12C) aufweist, die einer Verriegelungsposition (P1, P2) entspricht, wobei durch die Bohrung (12B, 12C) eine Stange (13) verläuft, die fest mit der Nebenleiter (3) verbunden ist.

4. Einklappbare Zugangsvorrichtung (1) nach einem der Ansprüche 1 bis 3, **dadurch gekennzeichnet, dass** die beiden Leitern (2 und 3) in derselben Ebene liegen, wenn sich das Positionierungsmittel (12) an einer ersten Verriegelungsposition (P1) befindet.

5. Einklappbare Zugangsvorrichtung (1) nach einem der Ansprüche 1 bis 4, **dadurch gekennzeichnet, dass** die beiden Leitern (2 und 3) einen Winkel (α) dazwischen bilden, wenn sich das Positionierungsmittel (12) an einer zweiten Verriegelungsposition (P2) befindet.

6. Einklappbare Zugangsvorrichtung (1) nach einem der Ansprüche 1 bis 5, **dadurch gekennzeichnet, dass** das Positionierungsmittel (12) fest mit mindestens einer Gleitschwenkverbindung (18, 19) verbunden ist.

7. Einklappbare Zugangsvorrichtung (1) nach einem der Ansprüche 1 bis 6, **dadurch gekennzeichnet, dass** das Positionierungsmittel (12) mithilfe eines Betätigungsmittels (13) entriegelt oder verriegelt wird, das vom oberen Teil der Vorrichtung (1) wie auch vom unteren Teil der Vorrichtung (1) betätigbar ist.

8. Einklappbare Zugangsvorrichtung (1) nach den Ansprüchen 3 und 7, **dadurch gekennzeichnet, dass** das Betätigungsmittel (13) von der Stange (13) gebildet ist, die Greifmittel (14, 15) an ihrem oberen sowie unteren Ende aufweist.

9. Einklappbare Zugangsvorrichtung (1) nach einem der Ansprüche 1 bis 8, **dadurch gekennzeichnet, dass** die Vorrichtung (1) mindestens eine Bedienplatte (16) aufweist, die in der Nähe einer Drehachse (81) des Gelenks (8) zwischen den Leitern (2, 3) platziert ist.

10. Einklappbare Zugangsvorrichtung (1) nach einem der Ansprüche 1 bis 9, **dadurch gekennzeichnet, dass** jede Leiter (2, 3) Griffe (40) parallel zu den Holmen (1) und fest verbunden mit den Sprossen (60) der betrachteten Leiter (2, 3) aufweist.

## Claims

1. Stowable height access device (1) integral with a vehicle wall, said stowable access device being **characterized by** the fact that it is provided with a left ladder (2) and a right ladder (3) adjacent to each other, each comprising a left post (22, 31) and a right post (21, 32) connected by steps (60), all the posts (21, 22, 31, 32) being parallel to each other, the left ladder (2) and the right ladder (3) being linked to each other by at least one joint (8) linking the left post (31) of the right ladder (3) and the right post (21) of the left ladder (2), one of both ladders (2), referred to as pivoting ladder, being further linked to the vehicle wall at its other post (21) by at least one hinge (9a, 9b) whose rotation axis (9) is parallel to the posts (21, 22, 31, 32), the other ladder (3), referred to as adjacent ladder (3), comprising positioning means (12) enabling this adjacent ladder (3) to be locked with respect to the wall according to at least one locking position.

2. Stowable access device (1) according to claim 1, **characterized by** the fact that the adjacent ladder (3) is provided with at least one sliding pin linking (18, 19) at the post (32) which is not linked to the other ladder (2), said sliding pin linking (18, 19) being integral with the wall and perpendicular to the posts (21, 22, 31, 32).

3. Stowable access device (1) according to claims 1 or 2, **characterized by** the fact that the positioning means (12) comprises at least one drilling (12B, 12C) corresponding to a locking position (P1, P2), a rod (13) integral with the adjacent ladder (3) passing through said drilling (12B, 12C).

4. Stowable access device (1) according to anyone of claims 1 to 3, **characterized by** the fact that both ladders (2, 3) are coplanar when the positioning means (12) is at a first locking position (P1).

5. Stowable access device (1) according to anyone of claims 1 to 4, **characterized by** the fact that an angle (α) is formed between both ladders (2 and 3) when the positioning means (12) is at a second locking position (P2).

6. Stowable access device (1) according to anyone of claims 1 to 5, **characterized by** the fact that the positioning means (12) is integral with at least one sliding pin linking (18, 19).

7. Stowable access device (1) according to anyone of claims 1 to 6, **characterized by** the fact that the positioning means (12) is unlocked or locked by means of a control means (13) operable from the top of the device (1) as well as from the bottom of the device (1).

8. Stowable access device (1) according to claims 3 and 7, **characterized by** the fact that the control means (13) is constituted by the rod (13) which comprises grasping means (14, 15) at each of its upper and lower ends.

9. Stowable access device (1) according to anyone of claims 1 to 8, **characterized by** the fact that the device (1) comprises at least one operating tab (16) arranged in the vicinity of a rotation axis (81) of the joint (8) between the ladders (2, 3).

10. Stowable access device (1) according to anyone of claims 1 to 9, **characterized by** the fact that each ladder (2, 3) is provided with handles (40) parallel to the posts (1) and integral with the steps (40) of the considered ladder (2, 3).
